# EUROPEAN PATENT APPLICATION

(11) **EP 3 726 449 A1**
(43) Date of publication of application: **21.10.2020**
(21) Application number: 19170325.5
(22) Date of filing: 18.04.2019
(51) Int. Cl.: G06Q 30/06

(54) **METHODS, SYSTEMS, AND COMPUTING PLATFORMS FOR FACILITATING PURCHASE OF CHEMICAL PRECURSORS FOR USE IN THE MANUFACTURING OF A PRODUCT**

(71) Applicant: Covestro Deutschland AG, 51373 Leverkusen (DE)
(72) Inventor: The designation of the inventor has not yet been filed
(74) Representative: Levpat

(57) **Abstract**

Methods, systems, and computing platforms for facilitating purchase of one or more chemical precursors for use in the manufacturing of a product having one or more target specifications are disclosed. Exemplary implementations may: receive from an electronic device of a user a request for one or more chemical precursors; receive from the electronic device of the user a product to be manufactured with the requested one or more chemical precursors and one or more target specifications associated with the product; provide from a merchant database one or more merchants offering one or more of the requested chemical precursors; provide a prediction model describing a functional relationship between technical data of each of the one or more requested chemical precursors and the one or more target specifications of the product to be manufactured with the requested one or more chemical precursors; retrieve from the merchant database a data specification file for each of the requested one or more chemical precursors necessary for producing the product; calculate on a computer using the prediction model, using the technical data contained in the data specification files retrieved in retrieving from the merchant database, a degree of matching the one or more target specifications for the product if the product would be manufactured using the requested one or more chemical precursors corresponding to the data specification files retrieved in retrieving from the merchant database; and communicate to the user the degree of matching calculated in calculating on the computer.

## Description

This disclosure relates to methods, systems, and computing platforms for facilitating purchase of one or more chemical precursors for use in the manufacturing of a product having one or more target specifications.

In the chemical industry it is a common task to produce products - final products or intermediate products- in a sequence of distinct process steps where in each step chemical precursors undergo a chemical reaction in order to yield the desired product or intermediate product. These chemical precursors are normally supplied by specialized supplier companies and procured by the entity producing the targeted product. Only in rare cases the company producing the targeted product also produces the required precursor products.

Especially in the production of high performance materials, such as certain polymers, the chemical products need to precisely exhibit a set of specific product properties in order to be fit for use and provide the best quality. Hence, in order to meet defined target specifications of the product and thus reliably ensure constant product quality and usability there is the need for the entity manufacturing the desired chemical product to apply chemical precursors which are not only generally suitable for the production process, such as a certain type of polyol and isocyanate to produce a certain polyurethane foam material, but have properties and/or a composition that is suitable and preferably optimized for use in the production of a target product in relation to the process parameters that are used for producing the product. However, properties and/or composition of a chemical precursor will typically vary between production lots of a supplier as well as between suppliers of the same chemical precursor. As a result, the manufacturer of a target product using the chemical precursors may need to adjust his manufacturing process depending on particular properties and composition of the chemical precursor lots. Alternatively or additionally, the quality of the target product will vary depending on the chemical precursor lots used. This in turn may lead to a rather broad quality specification of the target product which may be undesirable for a customer of the target product. Accordingly, it would be desirable to find a way to reduce the broadness of the quality specification of a target product. In particular, it would be desirable to enable a manufacturer to procure needed chemical precusors that have a composition and/or properties that are optimized to producing a desired target product with desired properties and quality.

It is therefore desirable to provide a method for facilitating purchase of one or more chemical precursors for use in the manufacturing of a product which ensures the application of chemical precursors in the manufacturing process which are most suited for meeting the targeted specifications of the product and thus lead to products which precisely meet the desired specifications, enabling a narrower specification for the target products.

According to one aspect of the present disclosure there is provided a method for facilitating purchase of one or more chemical precursors for use in the manufacturing of a product having one or more target specifications. The method comprises step (a) receiving from an electronic user device of a user a request for one or more chemical precursors. The method further comprises step (b) receiving from the electronic user device of said user information identifying a product to be manufactured with said requested one or more chemical precursors and one or more target specifications associated with said product. The method further comprises step (c) providing from a merchant database one or more merchants offering one or more of the requested chemical precursors. The method further comprises step (d) providing a prediction model describing a functional relationship between technical data of each of said one or more requested chemical precursors and the one or more target specifications of said product to be manufactured with said requested one or more chemical precursors. The method further comprises step (e) retrieving from said merchant database a data specification file for each of the requested one or more chemical precursors necessary for manufacturing the product, said data specification file comprising the technical data corresponding to the chemical precursor and being associated with a respective merchant offering the chemical precursor. The method further comprises step (f) obtaining a degree of matching the one or more target specifications for the product if the product would be manufactured using the requested one or more chemical precursors corresponding to the data specification files retrieved in step (e) by calculating on a computer using said prediction model and the technical data contained in the data specification files retrieved in step (e). The method further comprises step (g) communicating to the user the degree of matching calculated in step (f), the one or more chemical precursors corresponding to the data specification files used in the calculation and the respective merchants of the one or more chemical precursors of which the data specification files were used in the calculation in step (f).

The present invention is based on the recognition that although the properties of chemical precursors for the production of certain products, the chemical precursors being available on the market, are in line with the specifications required for the production of the product by the manufacturer of the product these properties may still vary within permissible parameter ranges which in turn may have a substantial effect on the properties and the quality of the target product. These variations may occur between different production lots of chemical precursors provided by one supplier or between the chemical precursor lots offered by different suppliers.

According to the present invention the exact properties and or composition of the chemical precursors are comprised as technical data in data specification files relating to the respective chemical precursors and associated with a merchant offering these chemical precursors. The present invention further teaches to utilize a prediction model implemented on a computer that describes the functional relationship between technical data of each of the requested chemical precursors and the target specifications of the product to be manufactured with the chemical precursors. Based on this prediction model a computer is used to calculate, using said technical data contained in the data specification file, a degree of matching the target specifications for said product if said product would be manufactured using the chemical precursors. This enables the user to make an informed decision, based on the computer implemented prediction model, and select those chemical precursors for the manufacturing offered by certain merchants which may ensure the best possible match of the targeted product specifications and thus the best possible product.

For example, in case of a polyurethane foam as a product to be manufactured by the user the chemical precursors may comprise a polyol and an isocyanate. Further, chemical precursors for producing a polyurethane foam may comprise catalysts, blowing agents and further additives. Desired properties of the polyurethane foam to be produced, i.e. the target specifications, may include for example raw density, hardness, flammability, tensile strength in case of a flexible foam or heat conductivity (initial and aged lambda-value) compressive strength, tensile strength (perpendicular to faces), dimensional stability, fire behavior in case of a rigid foam.

According to the invention the respective data specification file of the chemical precursors comprises the technical data corresponding to the chemical precursor being associated with a respective merchant offering the chemical precursor. In case of a polyurethane foam material as the product to be manufactured the technical data comprised in the data specification file of the chemical precursors may include the OH number or the water content of the polyol and the medium functionality or the acidity of the isocyanate.

According to another embodiment the product to be manufactured may be a polycarbonate product which has been produced from polycarbonate pellets in an injection molding process. As an example, the polycarbonate product may be a casing for a laptop computer. Here, the one or more target specifications of the product may be the flame protection, the dimensional stability under heat or the impact resistance of the casing material. The polycarbonate pellets, which may be a pure polycarbonate or a polycarbonate blend (e.g. PC/ABS), may represent the chemical precursor for the manufacturing of the product. The technical data comprised in the data specification file of the chemical precursor (PC pellets) may include
- rheological properties, e.g. volume flow rate or shrinkage,
- mechanical properties, e.g. tensile modulus, elongation at break or notch impact strength,
- thermal properties, e.g. glass transition temperature, Vicat softening temperature or linear thermal expansion coefficient, or
- electrical properties, e.g. relative permittivity, specific contact resistance or dielectric strength.

Typical technical data of two types of polycarbonate are listed in the following table:

**Table 1: selection of material properties of two grades (2605 - medium viscosity, 3105 - high viscosity) of polycarbonate Makrolon®, Covestro Deutschland AG**

| | Polycarbonate | |
|---|---|---|
| | medium viscosity | high viscosity |
| *Rheological properties:* | | |
| melt volume flow rate ISO 1133 | 12.5 cm³/(10 min) | 6.0 cm³/(10 min) |
| processing shrinkage, parallel ISO 294-4 | 0.65 % | 0.7 % |
| Mechanical properties: | | |
| tensile modulus ISO 527-1,-2 | 2400 MPa | 2400 MPa |
| nominal elongation at break ISO 527-1,-2 | > 50 % | > 50 % |
| | | |

| *Thermal properties:* | | |
|---|---|---|
| glass transition temp. ISO 11357-1,-2 | 145°C | 146°C |
| linear thermal expansion coefficient parallel ISO 11359-1,-2 | 0.65·10⁻⁴/K | 0.65·10⁻⁴/K |
| | | |

| *Electrical properties:* | | |
|---|---|---|
| relative permittivity IEC 60250 | 3.1 | 3.1 |
| dielectric strength IEC 60243-1 | 34 kV/mm | 34 kV/mm |

According to a preferred embodiment of the present invention the prediction model comprises at least one machine learning algorithm. By applying one or more self-learning algorithm(s) in the prediction model the prediction model is capable of improving its own performance, in particular in terms of accuracy of the calculated degree of matching the one or more target specifications for the product if the product would be manufactured using certain chemical precursors. In particular, reinforcement learning may be used to develop and improve the prediction model which, at least for some cases, may be more explorative and accurate than a prediction model generated either by analytic considerations or by other forms of machine learning such as supervised learning. In particular, for complex, subtle and potentially counterintuitive correlations between the technical data of the chemical precursors and the targeted specifications of the product, such an evolutionary approach may be the most efficient way to achieve and improve the desired prediction model.

According to an embodiment of the present invention the at least one machine learning algorithm comprised in the prediction model can be further trained from measured quality data of certain products manufactured using the one or more chemical precursors, wherein the one or more chemical precursors have been purchased based on facilitation by the method according to the invention. According to a further advanced embodiment of the present invention it can be provided that the user feeding its measured product quality data back into the at least one machine learning/self-learning algorithm is rewarded by the algorithm calculating a certain credit that is awarded to that user. The user may e.g. use this credit in order to obtain a discount or another purchase privilege when utilizing the method according to the invention another time.

According to an embodiment of the invention the technical data comprised in the data specification files comprises processing parameters associated with the production of the chemical precursor, measured or calculated material properties and/or recommended process settings for further processing of the one or more chemical precursors. Also, the technical data may include data regarding composition of components in the precursor including for example impurities contained in the chemical precursors which may be important for the production of a certain product whereas for a different product the impurities may be irrelevant. This ensures that the prediction model utilizes all relevant data available for the chemical precursors in order to calculate a precise value for the degree of matching the one or more target specifications.

According to a further embodiment of the invention the step of communicating to the user further comprises the communication of purchase conditions of the merchants, the purchase conditions including commercial data comprising purchase price and/or available quantity, and/or logistical data, comprising local availability, delivery time and/or shipping conditions. Accordingly, not only the degree of matching calculated by the prediction model on the basis of technical data is communicated to the user but also relevant commercial parameters are communicated to the user in order to enable the user to make a balanced decision, where appropriate, based on both the degree of matching the target specifications, of the product to be manufactured, i.e. technical aspects, and commercial data associated with the merchants offering the required chemical precursors. Hence, technical parameters (degree of matching) and commercial parameters (price, availability, delivery conditions) may be taken into account by the user.

According to a further embodiment of the invention the method further comprises step (h) that includes receiving from the electronic device of the user a purchase request for purchasing at least one of the one or more chemical precursors of at least one of the respective merchants communicated in communicating to the user. Accordingly, the method according to the invention allows the user to also close a transaction in order to obtain the selected chemical precursors and use them for the manufacturing of the product. Preferably, the purchase request is based on a maximized degree of matching the one or more target specifications for the product and/or the purchase conditions of the merchants.

Moreover, it is an option that the purchase request is related to at least two chemical precursors, wherein the at least two chemical precursors are offered by different merchants. For example, in case of a polyurethane foam as a product to be manufactured by the user the at least two different chemical precursors may comprise a polyol supplied by one merchant and an isocyanate supplied by another merchant. Further, chemical precursors for producing a polyurethane foam may comprise catalysts, blowing agents and further additives.

In order to ensure a transaction without difficulty the method may further comprise step (i) which includes transmitting purchase instructions in accordance with the purchase request of the user to the respective merchants.

According to a further embodiment of the invention the product is a physical product manufactured in a physical production process from the one or more chemical precursors, wherein the one or more chemical precursors comprise a thermoplastic polymer. In particular, the physical product may be a molded article, especially an injection molded article manufactured in an injection molding process. Injection molding processes are widely used in the industry in order to manufacture a large variety of parts, such as parts for the automotive industry. Here, the thermoplastic polymer is preferably polycarbonate or a polymer blend containing polycarbonate. Polycarbonate is known as a versatile high-performance material used in numerous applications.

As an alternative to the foregoing the product may be a chemical product, in particular a polymeric product, wherein the one or more chemical precursors undergo a chemical reaction during manufacturing of the product. In particular, the polymeric product may be a polyurethane product or a polyisocyanurate product manufactured in a polyurethane production process or a polyisocyanurate production process. Both polyurethane products and a polyisocyanurate products are widely and successfully used in several industries, like construction, automotive, leisure or electronics industry.

Another aspect of the present disclosure relates to a system configured for facilitating purchase of one or more chemical precursors for use in the manufacturing of a product having one or more target specifications. The system comprises one or more hardware processors configured by machine-readable instructions to carry out a method according to any one of claims 1 to 13.

As regards the benefits and advantages of the system according to the invention the benefits and advantages outlined in connection with the method according to the invention apply in a corresponding manner..

Yet another aspect of the present disclosure relates to a computing platform configured for facilitating purchase of one or more chemical precursors for use in the manufacturing of a product having one or more target specifications. The computing platform comprises a non-transient computer-readable storage medium having executable instructions embodied thereon to carry out a method according to any one of claims 1 to 13. The computing platform further comprises one or more hardware processors configured to execute the instructions.

As regards the benefits and advantages of the computing platform according to the invention the benefits and advantages outlined in connection with the method according to the invention apply in a corresponding manner.

These and other features, and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of 'a', 'an', and 'the' include plural referents unless the context clearly dictates otherwise.
FIG. 1 illustrates a system configured for facilitating purchase of one or more chemical precursors for use in the manufacturing of a product having one or more target specifications, in accordance with one or more implementations.
FIG. 2 illustrates a method for facilitating purchase of one or more chemical precursors for use in the manufacturing of a product having one or more target specifications, in accordance with one or more implementations.

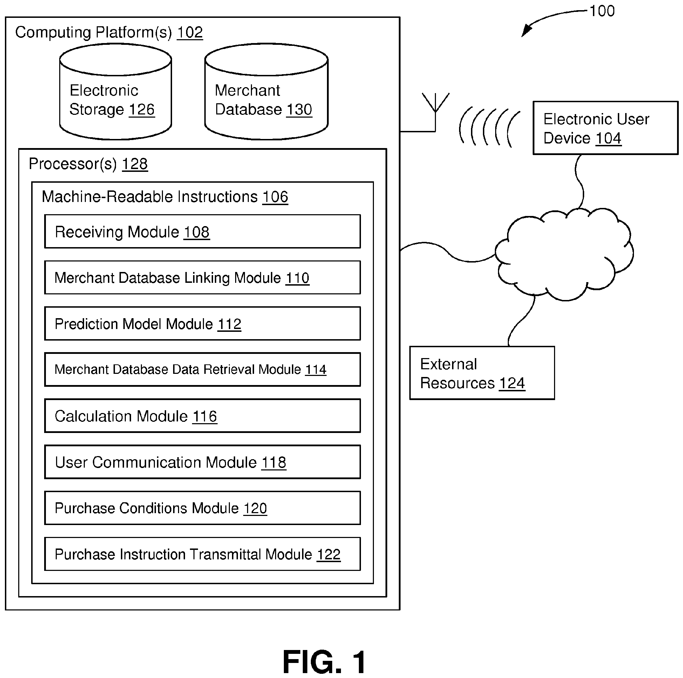

FIG. 1 illustrates a system 100 configured for facilitating purchase of one or more chemical precursors for use in the manufacturing of a product having one or more target specifications, in accordance with one or more implementations. In some implementations, system 100 may include one or more servers 102. Server(s) 102 may be configured to communicate with one or more client computing platforms according to a client/server architecture and/or other architectures.

Server(s) 102 may be configured by machine-readable instructions 106. Machine-readable instructions 106 may include one or more instruction modules. The instruction modules may include computer program modules. The instruction modules include a receiving module 108, a merchant database linking module 110, a prediction model module 112, a merchant database data retrieval module 114, a calculation module 116, a user communication module 118, a purchase conditions module 120, a purchase instruction transmittal module 122 and/or other instruction modules.

The receiving module 108 is configured for receiving a user request from an electronic user device 104 for one or more chemical precursors. By way of example these chemical precursors may comprise a polyol and a corresponding isocyanate for the production of a certain polyurethane foam material, e.g. a rigid foam for insulation purposes. The electronic user device 104 may be linked to the server 102 via a network such as the Internet and/or other networks. It will be appreciated that this is not intended to be limiting, and that the scope of this disclosure includes implementations in which server(s) 102, electronic user device 104, and/or external resources 124 may be operatively linked via some other communication media. The electronic user device 104 may also be directly connected to server 102 via e.g. a wireless connection as shown in Fig. 1. By way of non-limiting example, the electronic user device 104 may include one or more of a desktop computer, a laptop computer, a handheld computer, a tablet computing platform, a NetBook, a Smartphone, a gaming console, and/or other computing platforms. The receiving module 108 is further configured for receiving, in particular from that electronic user device 104, information identifying a product to be manufactured with said requested one or more chemical precursors.

The merchant database linking module 110 is configured for linking the user request and the information identifying a product to a merchant database 130, preferably implemented on a non-transitory storage medium, in order to provide from that merchant database 130 one or more merchants offering one or more of the requested chemical precursors. Preferably, the merchant database 130 is updated in regular intervals so as to provide up-to-date information on merchants active in the market offering chemical precursors which may be of interest for entities manufacturing products based on such chemical precursors.

The prediction model module 112 is configured to describe a functional relationship between technical data of each of the one or more requested chemical precursors and the one or more target specifications of the product to be manufactured with the requested one or more chemical precursors. In particular, the prediction model comprises at least one machine learning algorithm which renders the prediction model capable of improving its own performance.

The merchant database data retrieval module 114 is configured to retrieve from the merchant database 130 a data specification file for each of the requested one or more chemical precursors necessary for manufacturing the product, wherein the data specification file comprises the technical data corresponding to the chemical precursor(s) and being associated with a respective merchant offering the chemical precursor(s). Technical data included in the data specification file may comprise processing parameters associated with the production of the chemical precursor, measured or calculated material properties, recommended process settings for further processing of the chemical precursors and/or data regarding impurities contained in the chemical precursors.

The calculation module 116 is configured to calculate, using the prediction model comprised in the prediction model module 112, using the technical data contained in the data specification files retrieved from the merchant database 130, a degree of matching the one or more target specifications for the product if the product would be manufactured using the requested one or more chemical precursors corresponding to the data specification files.

The user communication module 118 is configured to communicate to the user, preferably through the electronic user device 104, the degree of matching calculated by the calculation module 116, the one or more chemical precursors corresponding to the data specification files used in the calculation and the respective merchants of the one or more chemical precursors of which the data specification files were used in the calculation.

Optionally, the instruction modules may further include purchase conditions module 120, purchase instruction transmittal module 122, and/or other instruction modules. The purchase conditions module 120 is configured to compile relevant purchase conditions of the merchants, in particular purchase price and/or available quantity, and/or logistical data, comprising local availability, delivery time and/or shipping conditions, and communicating the purchase conditions to the user, preferably through the electronic user device 104. In case more than one chemical precursor is required for the manufacturing of the product, offered by one merchant or by different merchants, the purchase conditions module 120 compiles and communicates the purchase conditions for all chemical precursors required and communicates the purchase conditions to the user.

The optional purchase instruction transmittal module 122 may be configured for receiving from the electronic user device 104 a purchase request for purchasing one or more chemical precursors of at least one of the respective merchants communicated to the user and transmitting purchase instructions in accordance with the purchase request of the user to the respective merchants offering the chemical precursors required for the manufacturing of the product. This purchase request is preferably purchase request is preferably based on a maximized degree of matching the one or more target specifications for the product and/or the purchase conditions of the merchants. Alternatively, the electronic user device 104 may be configured to directly transmit the purchase request to the one or more merchants via a network connection such as the Internet.

The external resources 124 shown in Fig. 1 may include sources of information outside of system 100, external entities participating with system 100, and/or other resources. In some implementations, some or all of the functionality attributed herein to external resources 124 may be provided by resources included in system 100. In particular, the external resources 124 may comprise communication devices or computing platforms of one or more merchants offering the one or more chemical precursors required for the manufacturing of the product.

The physical product to be manufactured by a manufacturing entity may be a molded article, in particular an injection molded article manufactured in a injection molding process. The thermoplastic polymer may be polycarbonate or a polymer blend containing polycarbonate which during manufacturing is liquefied pressed into a certain shape so as to form an article with a specified shape and subsequently solidified. Alternatively, the product may be a chemical product, in particular a polymeric product, wherein the one or more chemical precursors undergo a chemical reaction during manufacturing of the product. As mentioned above the polymeric product may be a polyurethane product or a polyisocyanurate product manufactured in a polyurethane production process or a polyisocyanurate production process each based on the chemical reaction of a polyol and a corresponding isocyanate.

Server(s) 102 may include electronic storage 126, one or more processors 128, and/or other components. Server(s) 102 may include communication lines, or ports to enable the exchange of information with a network and/or other computing platforms. Illustration of server(s) 102 in FIG. 1 is not intended to be limiting. Server(s) 102 may include a plurality of hardware, software, and/or firmware components operating together to provide the functionality attributed herein to server(s) 102. For example, server(s) 102 may be implemented by a cloud of computing platforms operating together as server(s) 102.

Electronic storage 126 may comprise non-transitory storage media that electronically stores information. The electronic storage media of electronic storage 126 may include one or both of system storage that is provided integrally (i.e., substantially non-removable) with server(s) 102 and/or removable storage that is removably connectable to server(s) 102 via, for example, a port (e.g., a USB port, a firewire port, etc.) or a drive (e.g., a disk drive, etc.). Electronic storage 126 may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage 126 may include one or more virtual storage resources (e.g., cloud storage, a virtual private network, and/or other virtual storage resources). Electronic storage 126 may store software algorithms, information determined by processor(s) 128, information received from server(s) 102, information received from the electronic user device(s) 104, and/or other information that enables server(s) 102 to function as described herein.

Processor(s) 128 may be configured to provide information processing capabilities in server(s) 102. As such, processor(s) 128 may include one or more of a digital processor, an analog processor, a digital circuit designed to process information, an analog circuit designed to process information, a state machine, and/or other mechanisms for electronically processing information. Although processor(s) 128 is shown in FIG. 1 as a single entity, this is for illustrative purposes only. In some implementations, processor(s) 128 may include a plurality of processing units. These processing units may be physically located within the same device, or processor(s) 128 may represent processing functionality of a plurality of devices operating in coordination. Processor(s) 128 may be configured to execute modules 108, 110, 112, 114, 116, 118, 120, and/or 122, and/or other modules. Processor(s) 128 may be configured to execute modules 108, 110, 112, 114, 116, 118, 120, and/or 122, and/or other modules by software; hardware; firmware; some combination of software, hardware, and/or firmware; and/or other mechanisms for configuring processing capabilities on processor(s) 128. As used herein, the term "module" may refer to any component or set of components that perform the functionality attributed to the module. This may include one or more physical processors during execution of processor readable instructions, the processor readable instructions, circuitry, hardware, storage media, or any other components.

It should be appreciated that although modules 108, 110, 112, 114, 116, 118, 120, and/or 122 are illustrated in FIG. 1 as being implemented within a single processing unit, in implementations in which processor(s) 128 includes multiple processing units, one or more of modules 108, 110, 112, 114, 116, 118, 120, and/or 122 may be implemented remotely from the other modules. The description of the functionality provided by the different modules 108, 110, 112, 114, 116, 118, 120, and/or 122 described below is for illustrative purposes, and is not intended to be limiting, as any of modules 108, 110, 112, 114, 116, 118, 120, and/or 122 may provide more or less functionality than is described. For example, one or more of modules 108, 110, 112, 114, 116, 118, 120, and/or 122 may be eliminated, and some or all of its functionality may be provided by other ones of modules 108, 110, 112, 114, 116, 118, 120, and/or 122. As another example, processor(s) 128 may be configured to execute one or more additional modules that may perform some or all of the functionality attributed below to one of modules 108, 110, 112, 114, 116, 118, 120, and/or 122.

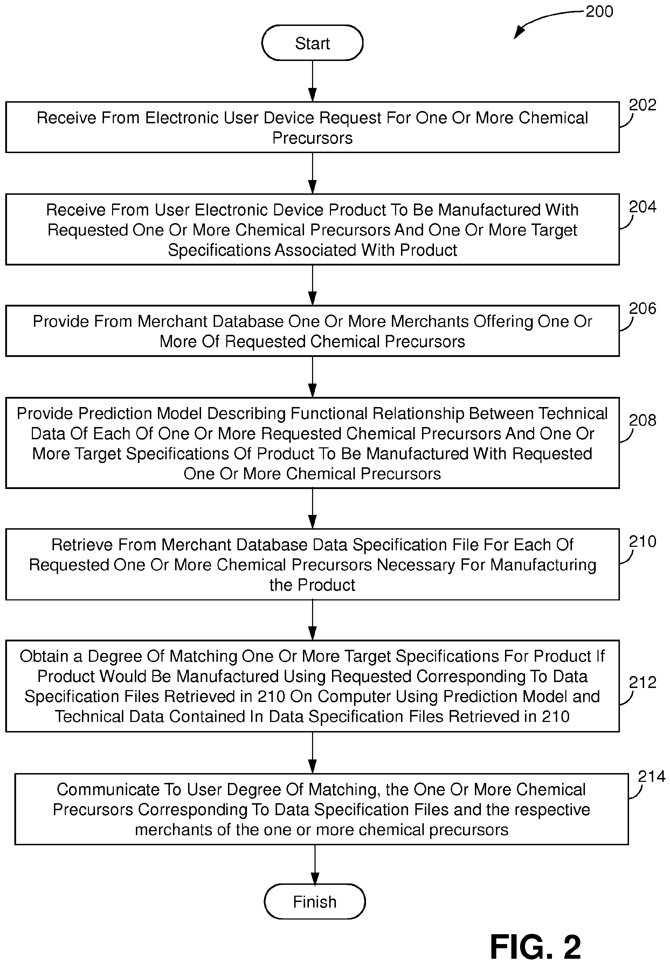

FIG. 2 illustrates a method 200 for facilitating purchase of one or more chemical precursors for use in the manufacturing of a product having one or more target specifications, in accordance with one or more implementations. The operations of method 200 presented below are intended to be illustrative. In some implementations, method 200 may be accomplished with one or more additional operations not described, and/or without one or more of the operations discussed. Additionally, the order in which the operations of method 200 are illustrated in FIG. 2 and described below is not intended to be limiting.

In some implementations, method 200 may be implemented in one or more processing devices (e.g., a digital processor, an analog processor, a digital circuit designed to process information, an analog circuit designed to process information, a state machine, and/or other mechanisms for electronically processing information). The one or more processing devices may include one or more devices executing some or all of the operations of method 200 in response to instructions stored electronically on an electronic storage medium. The one or more processing devices may include one or more devices configured through hardware, firmware, and/or software to be specifically designed for execution of one or more of the operations of method 200.

Operation 202 includes receiving from an electronic device of a user a request for one or more chemical precursors. Operation 202 may be performed by one or more hardware processors configured by machine-readable instructions including a module that is the same as or similar to device receiving module 108, in accordance with one or more implementations.

Operation 204 includes receiving from the electronic device of the user a product to be manufactured with the requested one or more chemical precursors and one or more target specifications associated with the product. Operation 204 may be performed by one or more hardware processors configured by machine-readable instructions including a module that is the same as or similar to device receiving module 108, in accordance with one or more implementations.

Operation 206 may include providing from a merchant database one or more merchants offering one or more of the requested chemical precursors. Operation 206 may be performed by one or more hardware processors configured by machine-readable instructions including a module that is the same as or similar to merchant database providing module 110, in accordance with one or more implementations.

Operation 208 includes providing a prediction model describing a functional relationship between technical data of each of the one or more requested chemical precursors and the one or more target specifications of the product to be manufactured with the requested one or more chemical precursors. Operation 208 may be performed by one or more hardware processors configured by machine-readable instructions including a module that is the same as or similar to prediction model providing module 112, in accordance with one or more implementations.

Operation 210 includes retrieving from the merchant database a data specification file for each of the requested one or more chemical precursors necessary for producing the product. The data specification file includes the technical data corresponding to the chemical precursor and being associated with a respective merchant offering the chemical precursor. Operation 210 may be performed by one or more hardware processors configured by machine-readable instructions including a module that is the same as or similar to merchant database retrieval module 114, in accordance with one or more implementations.

Operation 212 includes calculating on a computer using the prediction model, using the technical data contained in the data specification files retrieved in operation 210, a degree of matching the one or more target specifications for the product if the product would be manufactured using the requested one or more chemical precursors corresponding to the data specification files retrieved in operation 210. Operation 212 may be performed by one or more hardware processors configured by machine-readable instructions including a module that is the same as or similar to computer calculation module 116, in accordance with one or more implementations.

Operation 214 includes communicating to the user the degree of matching calculated in operation 212, the one or more chemical precursors corresponding to the data specification files used in the calculation and the respective merchants of the one or more chemical precursors of which the data specification files were used in the calculation in operation 212. Operation 214 may be performed by one or more hardware processors configured by machine-readable instructions including a module that is the same as or similar to user communication module 118, in accordance with one or more implementations.

Although the present technology has been described in detail for the purpose of illustration based on what is currently considered to be the most practical and preferred implementations, it is to be understood that such detail is solely for that purpose and that the technology is not limited to the disclosed implementations, but, on the contrary, is intended to cover modifications and equivalent arrangements that are within the spirit and scope of the appended claims. For example, it is to be understood that the present technology contemplates that, to the extent possible, one or more features of any implementation can be combined with one or more features of any other implementation.

## Claims

1. Method for facilitating purchase of one or more chemical precursors for use in the manufacturing of a product having one or more target specifications, the method comprising:
(a) receiving from an electronic user device (104) of a user a request for one or more chemical precursors;
(b) receiving from the electronic user device of the user information identifying a product to be manufactured with the requested one or more chemical precursors and one or more target specifications associated with the product;
(c) providing from a merchant database (130) one or more merchants offering one or more of the requested chemical precursors;
(d) providing a prediction model describing a functional relationship between technical data of each of the one or more requested chemical precursors and the one or more target specifications of the product to be manufactured with the requested one or more chemical precursors;
(e) retrieving from the merchant database (130) a data specification file for each of the requested one or more chemical precursors necessary for manufacturing the product, the data specification file comprising the technical data corresponding to the chemical precursor and being associated with a respective merchant offering the chemical precursor;
(f) obtaining a degree of matching the one or more target specifications for the product if the product would be manufactured using the requested one or more chemical precursors corresponding to the data specification files retrieved in step (e) by calculating on a computer using the prediction model and the technical data contained in the data specification files retrieved in step (e), and
(g) communicating to the user the degree of matching, the one or more chemical precursors corresponding to the data specification files used in the calculation and the respective merchants of the one or more chemical precursors of which the data specification files were used in the calculation in calculating on the computer.

2. The method of claim 1, wherein the prediction model comprises at least one machine learning algorithm.

3. The method of claim 1 or 2, wherein the technical data comprised in the data specification files comprises processing parameters associated with the production of the chemical precursor, measured or calculated material properties, compositional data and/or recommended process settings for further processing of the one or more chemical precursors.

4. The method of one of claims 1 to 3, wherein communicating to the user further comprises the communication of purchase conditions of the merchants, the purchase conditions including commercial data comprising purchase price and/or available quantity, and/or logistical data, comprising local availability, delivery time and/or shipping conditions.

5. The method of claim 3, wherein the method further comprises step (h) that includes receiving from the electronic device of the user a purchase request for purchasing at least one of the one or more chemical precursors of at least one of the respective merchants communicated in step (g).

6. The method of claim 5, wherein the purchase request is based on a maximized degree of matching the one or more target specifications for the product and/or the purchase conditions of the merchants.

7. The method of claim 5 or 6, wherein the purchase request is related to at least two chemical precursors, wherein the at least two chemical precursors are offered by different merchants.

8. The method of one of claims 5 to 7, wherein the method further comprises step (i) that includes transmitting purchase instructions in accordance with the purchase request of the user to the respective merchants.

9. The method of one of claims 1 to 8, wherein the product is a physical product manufactured in a physical production process from the one or more chemical precursors, wherein the one or more chemical precursors comprise a thermoplastic polymer.

10. The method of claim 9, wherein the physical product is a molded article, in particular an injection molded article manufactured in an injection molding process.

11. The method of claim 9 or 10, wherein the thermoplastic polymer is polycarbonate or a polymer blend containing polycarbonate.

12. The method of one of claims 1 to 11, wherein the product is a chemical product, in particular a polymeric product, wherein the one or more chemical precursors undergo a chemical reaction during manufacturing of the product.

13. The method of claim 12, wherein the polymeric product is a polyurethane product or a polyisocyanurate product manufactured in a polyurethane production process or a polyisocyanurate production process.

14. A system configured for facilitating purchase of one or more chemical precursors for use in the manufacturing of a product having one or more target specifications, the system comprising:
one or more hardware processors configured by machine-readable instructions to carry out a method according to any one of claims 1 to 13.

15. A computing platform configured for facilitating purchase of one or more chemical precursors for use in the manufacturing of a product having one or more target specifications, the computing platform comprising:
a non-transient computer-readable storage medium having executable instructions embodied thereon to carry out a method according to any one of claims 1 to 13; and
one or more hardware processors configured to execute the instructions.
